# FASCICULE DE BREVET EUROPEEN

(11) **EP 1 144 901 B1**
(45) Date de publication et mention de la délivrance du brevet: **03.01.2007**
(21) Numéro de dépôt: 00900586.9
(22) Date de dépôt: 14.01.2000
(51) Int. Cl.: F16L 47/00

(54) **DISPOSITIF DE BRANCHEMENT D'UNE CANALISATION DE DERIVATION SUR UNE CANALISATION DE TRANSPORT DE FLUIDE**
VORRICHTUNG ZUM ANSCHLIESSEN EINER ZWEIGLEITUNG AN EINE FLUIDFÜHRENDE LEITUNG
DEVICE FOR CONNECTING A BRANCH PIPE ON A FLUID-TRANSPORTING PIPING SYSTEM

(30) Priorité: 18.01.1999 FR 9901077
(43) Date de publication de la demande: 17.10.2001
(73) Titulaire: Innovation Generale, 98007 Monaco Cedex (MC)
(72) Inventeur: DAUMAS, Didier, 06390 Chateauneuf Villevieille (FR); DAUMAS, Lionel, avenue d'Estienne d'Orves, 06000 Nice (FR); KERVERN, Jean-Philippe, 06000 Nice (FR); LAPEYRE, Marc, F-06340 La Trinité (FR)
(74) Mandataire: Domange, Maxime
(86) Numéro de dépôt international: PCT/FR2000/000078
(87) Numéro de publication internationale: WO 2000/042342

(56) Documents cités:
- DE-A- 19 512 591
- DE-A- 19 630 029
- DE-A- 19 705 265
- FR-A- 2 757 442

## Description

La présente invention concerne un dispositif de branchement d'au moins une canalisation de dérivation sur une canalisation de transport de fluide ; le fluide transporté peut être sous pression ou non, à l'état liquide ou gazeux.

L'invention concerne plus particulièrement un tel dispositif de raccordement d'une canalisation dite secondaire sur une canalisation dite principale, qui comporte une première portion , formant une selle, qui est apte à recouvrir une partie de la face externe de la paroi de la canalisation principale, sur laquelle elle s'appuie et/ou s'emboîte.

Un organe résistif (électriquement conducteur) peut être intégré à cette selle et est destiné à être raccordé à une source de courant pour provoquer, par échauffement de la selle et de la canalisation principale, le soudage du dispositif à cette canalisation ; de tels dispositifs de raccordement dits électrosoudables, sont particulièrement adaptés aux cas où la canalisation principale transporte un fluide sous pression ; si au contraire le fluide est transporté sans pression (ou sous faible pression), le dispositif de raccordement peut être solidarisé à cette canalisation par une liaison mécanique telle qu'une sangle.

De tels dispositif comportent en outre un manchon tubulaire formant un embout pour le raccordement de la canalisation secondaire, ainsi qu'un fût (ou deuxième manchon) cylindrique dans lequel un organe perforateur est monté mobile coaxialement au fût ; l'organe perforateur comporte une partie tubulaire inférieure dont l'extrémité libre forme une lame de découpe de la paroi de la canalisation principale, et dont la partie supérieure est filetée extérieurement pour coopérer avec une partie intérieure filetée du fût ; de tels dispositifs sont décrits dans les documents US 4,684,417, FR 2 519 578, EP 736 718 et EP 821 193.

L'invention s'applique particulièrement à de tels dispositifs dont la selle, le fût et le manchon forment une seule pièce en matière plastique moulée, comme il est par exemple décrit dans DE-A-197 05 265.

D'autres dispositifs de branchement complexes aussi bien dans leur structure que dans leur mise en oeuvre, sont décrits par exemple dans le document EP-A-0 726 419.

La présente invention a pour objet de proposer un tel dispositif de branchement qui soit de conception simple de manière à être de coût réduit, qui soit facile à mettre en oeuvre même par un personnel peu qualifié, et qui permette de brancher une canalisation de dérivation sur une canalisation de transport de fluide alors que le fluide transporté est sous pression, c'est à dire sans interrompre la fourniture de fluide par cette canalisation (dite principale).

L'objet de l'invention est satisfait grâce au dispositif de branchement de la revendication 1.

Ainsi, la présente invention concerne un dispositif (connu) de branchement d'une canalisation de dérivation sur une canalisation - dite principale - de transport de fluide, la canalisation de transport de fluide comportant une paroi séparant le fluide du milieu extérieur, le dispositif de branchement comportant une partie (selle) de support de forme complémentaire à celle de surface extérieure de la paroi de la canalisation de transport de fluide et pourvue de moyens pour solidariser la partie de support à cette surface extérieure ; un dispositif de perforation de la paroi de la canalisation principale, comporte un organe perforateur susceptible d'être mis en mouvement dans un fût cylindrique solidaire de la partie de support pour pratiquer une ouverture dans la paroi de la canalisation principale, ainsi qu'un embout de raccordement de la canalisation de dérivation à la canalisation principale et susceptible d'être mis en communication avec cette dernière après que ladite ouverture ait été pratiquée et que l'organe perforateur ait été dégagé de cette ouverture.

Selon l'invention, le dispositif de branchement comporte un dispositif d'étanchéité interdisant (ou limitant) le passage dudit fluide entre le fût et l'organe perforateur, dont une partie est formée par la surface intérieure du fût, et qui est en contact d'étanchéité avec une partie inférieure lisse de la surface extérieure de l'organe perforateur.

Le dispositif d'étanchéité comprend un bourrelet torique proéminent à la surface intérieure du fût, qui assure un contact d'étanchéité avec ladite partie lisse dudit organe perforateur ; de préférence ce bourrelet qui occasionne un rétrécissement de la section transversale intérieure du fût, est formé d'une seule pièce avec le fût, lors du moulage de celui-ci.

Selon une variante de réalisation, le rétrécissement de la section intérieure du fût est obtenu par un anneau de section circulaire (joint torique amovible ou non) dans une gorge torique prévue sur la surface intérieure de la paroi du fût.

Un tel anneau peut être surmoulé sur la surface intérieure du fût cylindrique, et/ou peut être solidarisé au fût par soudage : il peut à la rigueur être constitué par un joint torique ajouté (logé) dans la gorge du fût après moulage de celui-ci ; cependant le moulage de cette gorge nécessitant l'usage d'un outil (noyau) expansible, entraîne une difficulté de réalisation.

En d'autres termes, l'invention consiste à proposer un tel dispositif de branchement dans lequel la portion (ou selle) d'appui, l'embout de raccordement, le fût recevant le perforateur et des moyens d'étanchéité entre le fût et le perforateur sont solidarisés par moulage ou surmoulage ; en outre les moyens d'étanchéité sont conformés de manière à enserrer la face lisse du perforateur après introduction de celui-ci dans le fût ; à cet effet le diamètre de passage des moyens d'étanchéité, à l'état libre, est inférieur au diamètre de ladite face externe lisse de l'organe perforateur ; de préférence la différence desdits diamètres est située dans une plage allant de 0,3 à 0,9 mm, en particulier de 0,4 à 0,8 mm.

De préférence les moyens d'étanchéité sont constitués par un ou deux bourrelet(s) annulaire(s) en forme de tore d'axe sensiblement confondu avec l'axe longitudinal du fût, et de section sensiblement demi-circulaire ; le bourrelet annulaire est de préférence constitué de la même matière que celle constituant les parois du fût, étant obtenu par moulage en une seule opération, et le profil de la section du tore est aplati dans sa partie centrale.

A cet effet, et selon un autre aspect, l'invention consiste à proposer un moule d'injection selon la revendication 10, moule d'injection d'une ébauche en matière plastique du dispositif de branchement, qui comporte un noyau formant une portion amovible du moule, qui reçoit ou sert à former les moyens d'étanchéité ; de préférence, afin de former lors du moulage un bourrelet torique d'étanchéité proéminent à la surface interne du fût, le noyau amovible comporte une gorge annulaire en forme de tore coaxial avec l'axe longitudinal du noyau qui est de forme générale sensiblement cylindrique ; cette gorge s'étend entre une portion d'extrémité du noyau servant à mouler une chambre de raccordement du fût et de l'embout, et une portion centrale du noyau servant à mouler le fût.

Alternativement, le noyau peut comporter une portée par exemple cylindrique équipée de butées pour la maintien d'un joint torique ; dans ce cas, ce joint est solidarisé à l'ébauche par surmoulage lors du moulage de celle-ci ; ceci comporte néanmoins l'inconvénient d'une manipulation supplémentaire puisqu'il faut disposer un joint sur le noyau pour chaque pièce à fabriquer, puis s'assurer après démoulage que sa position est correcte.

Dans les deux cas, de préférence, la portion centrale du noyau servant à mouler le fût est filetée extérieurement pour former, lors du moulage, le filetage intérieur du fût ; dans ce cas l'extraction du noyau hors de l'ébauche moulée est effectuée par dévissage du noyau par rapport au fût.

Lors de l'extraction du noyau, les moyens d'étanchéité formés ou intégrés à l'ébauche sont soumis à une déformation : une déformation essentiellement élastique lorsque l'organe d'étanchéité est un joint surmoulé, ou bien essentiellement plastique lorsque cet organe est constitué par le bourrelet obtenu par moulage ; dans ce dernier cas il en résulte généralement un aplatissement du bourrelet dans sa partie centrale.

L'invention permet de façon étonnante d'assurer une étanchéité suffisante en pratique entre le fût et le perforateur ; l'invention permet d'éviter un contrôle visuel délicat de la présence du joint dans la pièce moulée et permet généralement d'éviter la présence de joints rapportés supplémentaires sur le perforateur.

L'invention permet d'assurer une liaison mécanique très résistante entre l'organe d'étanchéité et le fût, et permet d'obtenir un tel organe dont les risques d'usure et/ou de détérioration lors du déplacement du perforateur sont très faibles.

L'invention réduit le nombre de pièces à fabriquer et à stocker, à solidariser de façon étanche, et à contrôler.

L'invention facilite la fabrication robotisée du dispositif de branchement et réduit le nombre de manipulations des petites pièces déformables que sont les joints.

D'autres buts et avantages de l'invention apparaîtront clairement de la description suivante qui se réfère aux dessins annexés illustrant des exemples de réalisation.
La Figure 1 représente une vue en coupe transversale d'un dispositif de branchement selon l'invention.

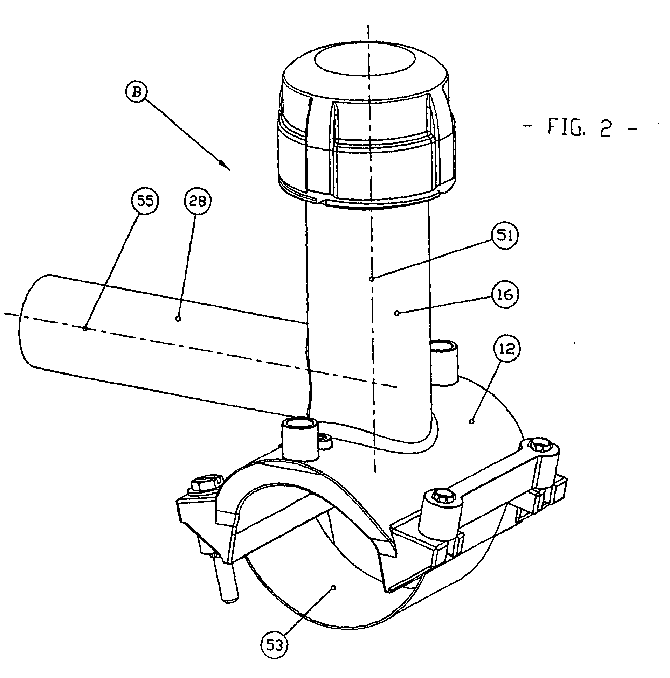

La figure 2 illustre en vue en perspective schématique un dispositif de branchement selon l'invention.

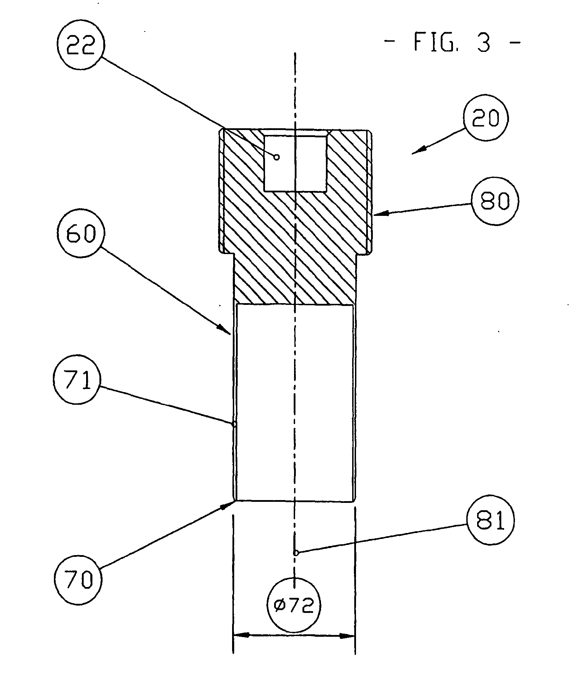

La figure 3 illustre en vue en coupe longitudinale le perforateur équipant le dispositif des figures 1 et 4.
La figure 4 est une vue en coupe par un plan transversal médian contenant les axes 51, 55 respectifs du fût et de l'embout, du dispositif illustré figure 2.
La figure 5 est une vue agrandie du détail A de la figure 4.
La figure 6 est une vue latérale du noyau amovible d'un moule pour la fabrication d'un dispositif selon l'invention.
La figure 7 est une vue agrandie du détail X de la figure 6.

La canalisation principale C qui comporte une paroi 10 cylindrique d'axe 50, est utilisée pour transporter un gaz combustible ou de l'eau entre une station de fourniture de ce fluide et un ou plusieurs postes utilisateurs de ce fluide.

La paroi 10 est constituée d'un matériau métallique comme le cuivre ou non métallique comme une matière plastique telle que le polyéthylène, adaptée à la nature et à la pression du fluide.

Le dispositif de branchement B comporte une selle de support 12, de forme complémentaire (généralement cylindrique d'axe 50) à celle de surface extérieure de la paroi 10.

La selle 12 est pourvue de moyens pour solidariser le dispositif B à la surface extérieure de la paroi 10, qui sont constitués de brides 14 coopérant avec une sangle 53. Le dispositif de branchement B comporte un dispositif de perforation P de la paroi 10, qui comporte un fût cylindrique 16 d'axe 51 sensiblement perpendiculaire à la paroi 10 en son sommet 52. Le fût cylindrique 16 est formé sur une partie de sa longueur la plus éloignée de la partie de support 12, avec un taraudage intérieur 18, 61 dans lequel peut se visser un perforateur 20 cylindrique qui est fileté extérieurement à sa partie supérieure 80.

Le perforateur 20 comporte à son extrémité supérieure dirigée vers l'extérieur du fût 16 une empreinte 22 creuse à six pans, de façon à pouvoir être mis en mouvement au moyen d'une clé hexagonale (non représentée). Le perforateur 20 comporte à son extrémité inférieure (dirigée vers la canalisation C) un organe de découpe 24, 70 susceptible de pénétrer dans une ouverture 26 prévue dans la partie de support 12 lorsque l'élément perforateur 20 est manoeuvré, de façon à perforer la paroi 10.

Le dispositif B comporte un embout cylindrique 28 d'axe 55 pour raccorder une canalisation de dérivation 54 à la canalisation C, après que celle-ci ait été perforée par le perforateur 20. Le volume intérieur 56 de l'embout 28 est en communication avec le volume intérieur 57 du fût cylindrique 16, par l'intermédiaire d'une chambre 58 ménagée dans le corps du dispositif B, et dans laquelle est situé le point d'intersection des axes 51 et 55.

La selle 12, le fût 16 et l'embout 28 sont réalisés d'une seule pièce, par moulage d'un matériau compatible avec le fluide transporté, en particulier constitué de polyéthylène. Le perforateur 20 peut être constitué d'un alliage métallique.

Pour brancher la canalisation 54 sur la canalisation C, on fixe d'abord la selle 12 sur la canalisation C au moyen des brides 14 (et/ou du dispositif intégré d'électrosoudage), puis on manoeuvre (par vissage) le perforateur 20 au moyen d'une clé coopérant avec l'empreinte 22, de façon à faire descendre l'extrémité inférieure du perforateur 20 au travers de la chambre 58 puis de l'ouverture 26 en direction de la canalisation C et à pratiquer une ouverture dans la paroi 10 de cette canalisation C. On manoeuvre ensuite le perforateur 20 en sens inverse pour l'éloigner de la paroi 10 et traverser la chambre 58 en remontant et permettre ainsi au fluide de s'écouler de la canalisation C à la canalisation 54 de dérivation en traversant la chambre 58. Un bouchon d'obturation étanche 29 est alors disposé sur l'extrémité supérieure ouverte du fût 16, par vissage sur un filetage formé à l'extrémité supérieure du fût 16 (la plus éloignée de la canalisation de transport C).

Conformément à l'invention, il est prévu un dispositif d'étanchéité E pour réduire ou supprimer une fuite de fluide de la chambre 58 vers l'extrémité supérieure ouverte du fût 16, par passage entre le perforateur et le fût 16. Ce dispositif d'étanchéité E est disposé entre le fût et l'organe de perforation 20.

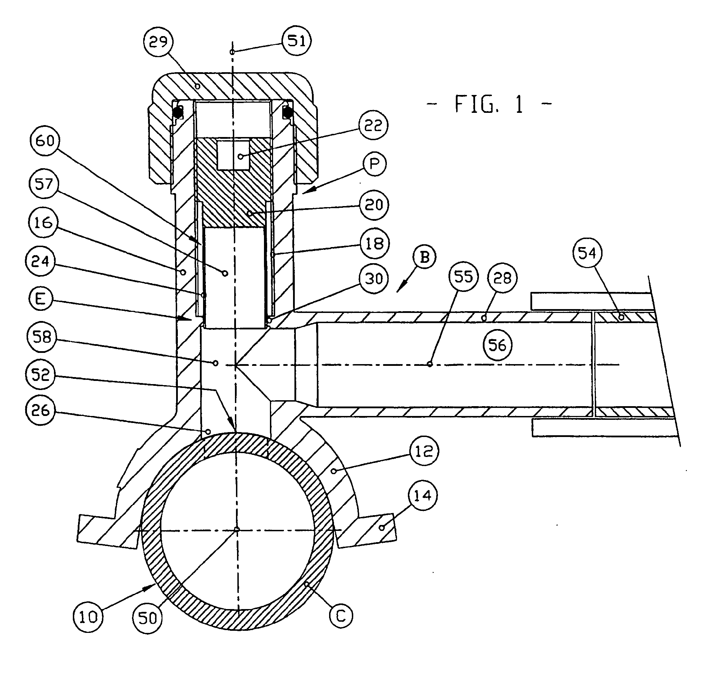

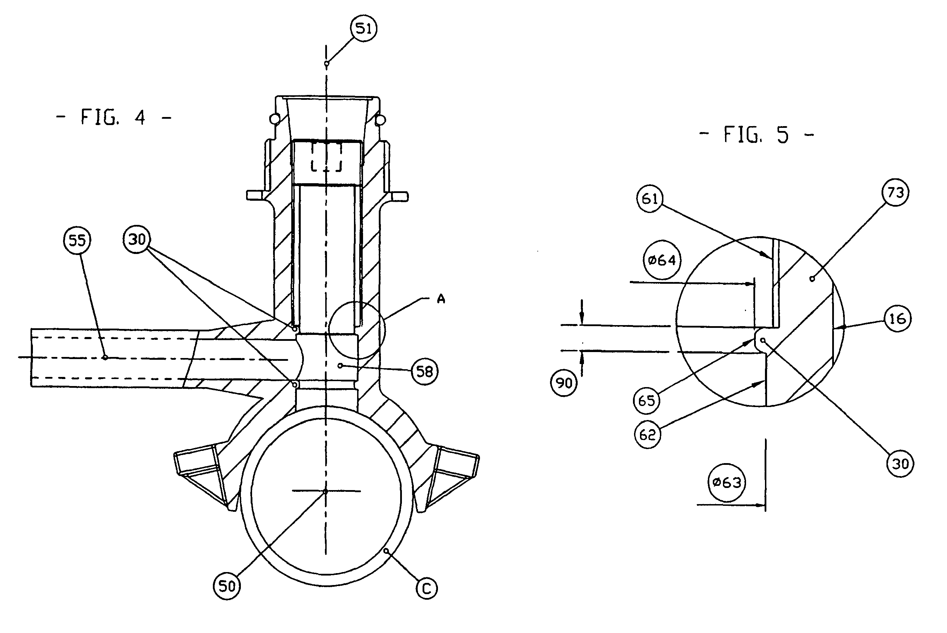

Sur les figures 1, 4 et 5 le dispositif d'étanchéité est constitué par un bourrelet annulaire (torique d'axe 51) formant un rétrécissement 30 du fût cylindrique 16, et venant en contact d'étanchéité avec la surface cylindrique (d'axe 81) lisse 60 prévue en partie inférieure de l'élément perforateur 20, laquelle surface lisse est formée à la périphérie extérieure de la lame de coupe 24, 70. Le dispositif E est situé, en considérant le flux de fluide de la canalisation C vers la canalisation 54, comme représenté Figure 1, en aval de l'orifice 26 d'entrée dans la chambre 58, entre cette chambre et le fût 16 ; on peut (comme illustré figure 4) prévoir un rétrécissement en amont et un autre rétrécissement en aval de la chambre 58 de façon à permettre une séparation étanche des conduits C et 54 par la manoeuvre du perforateur.

Le bourrelet 30 est formé d'une seule pièce avec le fût cylindrique 16, par moulage de la surface intérieure de la paroi du fût cylindrique 16 ; ce dernier est réalisé en polyéthylène, et la portion lisse 71 de l'élément perforateur 20 est en un matériau métallique, ce qui permet de réaliser une très bonne étanchéité sans joint supplémentaire.

Le joint 30 peut également être constitué d'un joint torique 30, en matériau élastique tel que du caoutchouc qui est surmoulé directement dans le fût cylindrique 16, et dimensionné pour venir en contact d'étanchéité avec la partie lisse de l'élément perforateur 20.

Le rétrécissement 30 peut également être obtenu par ajout d'un anneau circulaire en matière plastique telle que le polyéthylène, cet anneau circulaire recevant un joint torique en matériau élastique tel que du caoutchouc, cet ensemble étant surmoulé dans le fût cylindrique 16, le joint torique venant en contact d'étanchéité avec la partie lisse de l'élément perforateur 20.

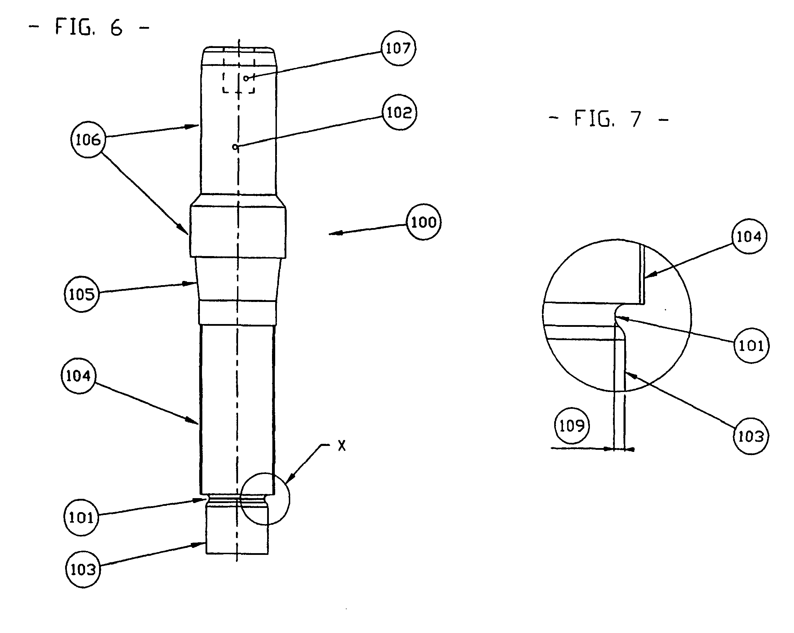

Le noyau 100 illustré figures 6 et 7 s'étend selon un axe 102 ; il comporte une première partie d'extrémité 106 munie d'un logement 107 pour sa fixation temporaire dans un moule à tiroirs tel que décrit dans les documents FR 2 519 578 et US 4,684,417 qui sont incorporés à la présente par référence ; le noyau comporte une partie centrale 105 pour le moulage de l'extrémité interne supérieure 91 du fût 16 ; une partie 104 cylindrique d'axe 102 et filetée permet l'obtention par moulage de la face filetée 61 du fût ; une deuxième partie d'extrémité 103 permet le moulage de la cavité 58 de liaison entre le fût 16 et l'embout 28.

Une gorge 101 torique d'axe 102 s'étend entre les portions 103 et 104 du noyau et sert au moulage du bourrelet 30 ; en choisissant une profondeur 109 de la gorge 101 voisine de 0,65 mm mesurée par rapport à la face cylindrique externe de l'extrémité 103, on obtient un bourrelet qui est partiellement écrasé par cette face lors de l'extraction du noyau hors du fût ; l'épaisseur proéminente du bourrelet après cette déformation est telle que la différence entre le diamètre 64 de la partie centrale déformée 65 et le diamètre 63 de la face cylindrique 62 est voisine de 0,8 mm (soit une épaisseur du bourrelet par rapport à cette face qui est voisine de 0,4 mm).

Le diamètre 64 est choisi inférieur au diamètre 72 du perforateur d'une valeur voisine de 0,6 mm.

Pour réaliser les deux bourrelets toriques superposés illustrés figure 4, on prévoit une deuxième gorge torique sur le portion 103 du noyau ; en variante on peut utiliser la gorge 101 pour porter un joint torique qui est solidarisé et/ou soudé à la paroi 73 du fût 16 lors de l'injection de la matière plastique de moulage.

En choisissant une hauteur de 90 du bourrelet 30 qui est au moins égale à son épaisseur proéminente, on augmente sa résistance à l'arrachement par le perforateur.

## Revendications

1. Dispositif de branchement (B) d'une canalisation de dérivation (54) sur une canalisation (C) de transport d'un fluide, ledit dispositif (B) comportant :
- une portion ou selle (12) d'appui sur une paroi (10) de la canalisation (C) ;
- un embout (28) de raccordement pour la canalisation (54) ;
- un organe perforateur (20) muni d'une lame (70) pour perforer la paroi (10) et d'une portion cylindrique (71) surmontant la lame dont la face externe (60) est lisse ;
- un fut (16) de forme cylindrique selon un axe (51), qui reçoit l'organe perforateur (20) et dans lequel le perforateur peut se déplacer par vissage pour passer d'une position de perforation de la paroi (10) à une position rétractée dans le fût (16) ;
- des moyens (E, 30) d'étanchéité entre le fût (16) et l'organe perforateur (20),
**caractérisé en ce que** la portion d'appui (12), l'embout (28), le fût (16) et les moyens (E) d'étanchéité sont formés d'une seule pièce par moulage ou surmoulage, et **en ce que** les moyens d'étanchéité comportent un bourrelet (30) annulaire occasionnant un rétrécissement de la surface interne du fût et s'appuient sur et/ou enserrent ladite face externe lisse de l'organe perforateur (20).

2. Dispositif selon la revendication 1 dans lequel le diamètre (64) de passage des moyens d'étanchéité, à l'état libre, est inférieur au diamètre (72) de ladite face (60) externe lisse de l'organe perforateur (20).

3. Dispositif selon la revendication 2 dans lequel la différence desdits diamètres (64, 72) est située dans une plage allant de 0,4 mm à 0,8 mm.

4. Dispositif selon l'une quelconque des revendications 1 à 3 dans lequel ledit bourrelet (30) annulaire présente la forme d'un tore d'axe sensiblement confondu av'ec l'axe longitudinal (51) du fût, et de section sensiblement demi-circulaire.

5. Dispositif selon la revendication 4 dans lequel le bourrelet annulaire est constitué de la même matière que celle constituant les parois (73) du fût, étant obtenu par moulage, et dont le profil de la section du tore est aplati dans sa partie (65) centrale.

6. Dispositif selon l'une quelconque des revendications 1 à 5 dans lequel les moyens (E) d'étanchéité comportent un bourrelet (30) annulaire coaxial au fût et disposé à l'extrémité inférieure de celui-ci.

7. Dispositif selon l'une quelconque des revendications 1 à 6 dans lequel l'organe perforateur (20) est démuni de joint d'étanchéité.

8. Dispositif selon l'une quelconque des revendications 1 à 7 dans lequel la portion d'appui (12), l'embout (28), le fût (16) et les moyens d'étanchéité (E, 30) forment une seule pièce moulée en polyéthylène en une seule opération.

9. Dispositif selon l'une quelconque des revendications 1 à 8 dans lequel la partie (61) filetée intérieurement du fût pour le vissage du perforateur est obtenue par moulage, le fût étant ainsi dénué d'insert tubulaire taraudé.

10. Moule pour la fabrication par injection de matière plastique de la portion d'appui (12), l'embout (28), le fût (16) et les moyens (E) d'étanchéité d'un dispositif de branchement (B) d'une canalisation de dérivation (54) sur une canalisation (C) de transport d'un fluide selon l'une des revendications 1 à 9,
**caractérisé en ce qu'**il comporte un noyau (100) allongé séparable des autres parties du moule et qui reçoit ou sert à former lesdits moyens d'étanchéité (E, 30) de telle sorte que le diamètre (64) de passage desdits moyens d'étanchéité, à l'état libre, soit inférieur au diamètre (72) de la face externe lisse (60) dudit organe perforateur (20).

11. Moule selon la revendication 10 dans lequel le noyau (100) comporte une gorge (101) annulaire en forme de tore coaxial avec l'axe (102) longitudinal du noyau.

12. Procédé de fabrication par injection de matière plastique de la portion d'appui (12), l'embout (28), le fût (16) et les moyens (E) d'étanchéité d'un dispositif de branchement (B) d'une canalisation de dérivation (54) sur une canalisation (C) de transport d'un fluide selon l'une des revendications 1 à 9,
**caractérisé en ce que** l'on utilise un moule selon l'une quelconque des revendications 10 ou 11.

13. Procédé selon la revendication 12 dans lequel on extrait le noyau (100) de la pièce moulée en provoquant une déformation élastique et/ou plastique des moyens d'étanchéité, l'extraction étant effectuée par dévissage du noyau fileté extérieurement, hors du fût dont le taraudage a été obtenu par moulage au contact de la partie filetée (104) du noyau.

14. Procédé selon la revendication 13 dans lequel on extrait le noyau (100) de la pièce moulée après que la pièce moulée et le noyau (100) soient sortis du moule.

## Claims

1. Device (B) for connecting a branch pipe (54) on a fluid-transporting system (C), said device (B) comprising:
- a support saddle or portion (12) on a wall (10) of the pipe (C);
- a connection piece (28) for the pipe (54);
- a perforating member (20) fitted with a cutter (70) for perforating the wall (10) and a cylindrical portion (71) surmounting the cutter whose external face (60) is smooth;
- a cylindrical shaft (16) along an axis (51) which receives the perforating member (20) and in which the perforator is able to move via screwing so as to move from a perforation position from the wall (10) to a retracted position in the shaft (16);
- sealing means (E, 30) between the shaft (16) and the perforating member (20),
**characterised in that** the support portion (12), the connection piece (28), the shaft (16) and the sealing means (E) are formed of a single piece by means of moulding or cast-moulding, and **in that** the sealing means comprise an annular flange (30) which causes a retraction of the internal surface of the shaft and they rest on and/or enclose said external smooth face of the perforating member (20).

2. Device according to claim 1 in which the passage diameter (64) of the sealing means in its free state is smaller than the diameter (72) of said external smooth face (60) of the perforating member (20).

3. Device according to claim 2 in which the difference of said diameters (64, 72) is within a range of between 0.4 mm and 0.8 mm.

4. Device according to any one of claims 1 to 3 in which said annular flange (30) is in the shape of a torus having its axis approximately merged with the longitudinal axis (51) of the shaft and having an approximately semi-circular section.

5. Device according to claim 4 in which the annular flange is made of the same material as that constituting the walls (73) of the shaft and obtained by moulding, the profile of the section of the torus of said flange being flattened in its central portion (65).

6. Device according to any one of claims 1 to 5 in which the sealing means (E) comprise an annular flange (30) coaxial to the shaft and placed at the lower extremity of the latter.

7. Device according to any one of claims 1 to 6 in which the perforating member (20) has no gasket.

8. Device according to any one of claims 1 to 7 in which the support portion (12), the connection piece (28), the shaft (16) and the sealing means (E, 30) form a single moulded polyethylene part in a single operation.

9. Device according to any one of claims 1 to 8 in which the internally threaded portion (61) of the shaft for screwing the perforator is obtained by means of moulding, the shaft thus being without any threaded tubular insert.

10. Mould for producing by means of the injection of plastic material, the support portion (12), the connection piece (28), the shaft (16) and the sealing means (E) for a device (B) for connecting a branch pipe (54) on a fluid-transporting pipe system (C) according to one of claims 1 to 9,
**characterised in that** it comprises an extended core (100) able to be separated from the other portions of the mould and which receives or is used to form said sealing means (E, 30) such that the passage diameter (64) of said sealing means in its free state is smaller than the diameter (72) of the external smooth face (60) of said perforating member (20).

11. Mould according to claim 10 in which the core (100) comprises an annular torus-shaped throat (101) coaxial with the longitudinal axis (102) of the core.

12. Production method by means of the injection of plastic material of the support portion (12), the connection piece (28), the shaft (16) and the sealing means (E) for a device (B) for connecting a branch pipe (54) on a fluid-transporting pipe system (C) according to one of claims 1 to 9,
**characterised in that** a mould is used according to claim 10 or 11.

13. Method according to claim 12 in which the core (100) is extracted from the moulded part by provoking an elastic and/or plastic deformation of the sealing means, the extraction being carried out by unscrewing the externally threaded core outside the shaft whose screw thread has been obtained by moulding in contact with the threaded portion (104) of the core.

14. Method according to claim 13 in which the core (100) is extracted from the moulded part after the moulded piece and the core (100) have left the mould.

## Patentansprüche

1. Vorrichtung (B) zum Anschließen einer Zweigleitung (54) an eine fluidführende Leitung (C), wobei die Vorrichtung (B) umfaßt:
- einen Abschnitt oder Sitz (12) zum Anliegen an einer Wand (10) der Leitung (C);
- eine Verbindungshülse (28) für die Leitung (54);
- ein Perforierungselement (20), das mit einer Klinge (70) zum Perforieren der Wand (10) und mit einem zylindrischen Abschnitt (71) versehen ist, der über der Klinge angeordnet ist und dessen Außenseite (60) geglättet ist;
- einen entlang einer Achse (51) zylinderförmigen Schaft (16), der das Perforierungselement (20) aufnimmt und in dem sich der Perforierer in einer Schraubbewegung verschieben kann, um von einer die Wand (10) perforierenden Position zu einer in den Schaft (16) zurückgezogenen Position überzugehen;
- Dichtmittel (E, 30) zwischen dem Schaft (16) und dem Perforierungselement (20),
**dadurch gekennzeichnet, daß** der Anlageabschnitt (12), die Hülse (28), der Schaft (16) und die Dichtmittel (E) mittels Formen oder Spritzguß einstückig ausgebildet sind und **dadurch**, daß die Dichtmittel einen ringförmigen Wulst (30) umfassen, der zu einer Verengung der inneren Oberfläche des Schafts führt und an der äußeren geglätteten Oberfläche des Perforierungselements (20) anliegt und/oder dieses einschnürt.

2. Vorrichtung nach Anspruch 1, wobei der Durchgangsdurchmesser (64) der Dichtungsmittel, wenn er frei ist, geringer als der Durchmesser (72) der äußeren geglätteten Oberfläche (60) des Perforierungselements (20) ist.

3. Vorrichtung nach Anspruch 2, wobei die Differenz zwischen den Durchmessern (64, 72) in einem Bereich zwischen 0,4 mm bis 0,8 mm liegt.

4. Vorrichtung nach einem der Ansprüche 1 bis 3, bei dem der ringförmige Wulst (30) die Form eines Achstorus, der im Wesentlichen mit der Längsachse (51) des Schafts (16) übereinstimmt, und einen im Wesentlichen halbkreisförmigen Querschnitt aufweist.

5. Vorrichtung nach Anspruch 4, wobei der ringförmige Wulst aus demselben Material wie die Wände des Schafts (16) besteht, wobei er durch Formen gebildet wird, und wobei das Querschnittsprofil des Torus in seinem Mittelabschnitt (65) abgeflacht ist.

6. Vorrichtung nach einem der Ansprüche 1 bis 5, wobei die Dichtmittel (E) einen ringförmigen Wulst (30) umfassen, der koaxial zu dem Schaft und an dessen innerem Ende angeordnet ist.

7. Vorrichtung nach einem der Ansprüche 1 bis 6, wobei das Perforierungselement (20) von der Dichtfuge abgesetzt ist.

8. Vorrichtung nach einem der Ansprüche 1 bis 7, wobei der Anlageabschnitt (12), die Hülse (28), der Schaft (16) und die Dichtmittel (E, 30) ein einziges in einem Arbeitsschritt aus Polyethylen geformtes Stück bilden.

9. Vorrichtung nach einem der Ansprüche 1 bis 8, wobei der innere Gewindeabschnitt (61) des Schafts zum Einschrauben des Perforierers durch Formen erhalten wird, so daß dem Schaft ein rohrförmiger Gewindeeinsatz fehlt.

10. Form zum Herstellen mittels Kunststoffspritzguß des Anlageabschnitts (12), der Hülse (28), des Schafts (16) und der Dichtmittel (E) einer Vorrichtung zum Anschließen (B) einer Zweigleitung (54) an eine fluidführende Leitung (C) nach einem der Ansprüche 1 bis 9,
**dadurch gekennzeichnet, daß** sie einen Kern (100) umfaßt, der sich trennbar von den anderen Teilen der Form erstreckt und der die Dichtmittel (E, 30) aufnimmt oder sie formt, so daß der Durchmesser (64) des Durchgangs der Dichtmittel, wenn er frei ist, geringer als der Durchmesser (72) der äußeren geglätteten Oberfläche (60) des Perforierungselements (20) ist.

11. Form nach Anspruch 10, wobei der Kern (100) eine ringförmige Rille (101) umfaßt, die einen mit der Längsachse (102) des Kerns koaxialen Torus bildet.

12. Verfahren zum Herstellen mittels Kunststoffspritzguß des Anlageabschnitts (12), der Hülse (28), des Schafts (16) und der Dichtmittel (E) einer Vorrichtung zum Anschließen (B) einer Zweigleitung (54) an eine fluidführende Leitung (C) nach einem der Ansprüche 1 bis 9,
**dadurch gekennzeichnet, daß** eine Form nach einem der Ansprüche 10 oder 11 verwendet wird.

13. Verfahren nach Anspruch 12, wobei der Kern (100) aus dem geformten Teil gezogen wird, wodurch eine elastische und/oder plastische Verformung der Dichtmittel verursacht wird, wobei das Herausziehen durch Herausdrehen des außen mit Gewinde versehenen Kerns aus dem Schaft erfolgt, dessen Gewinde mittels Formen im Kontakt mit dem Gewindeteil (104) des Kerns erhalten wird.

14. Verfahren nach Anspruch 13, wobei der Kern (100) aus dem geformten Teil gezogen wird, nachdem das geformte Teil und der Kern (100) die Form verlassen haben.
